# EUROPEAN PATENT SPECIFICATION

(11) **EP 4 325 318 B1**
(45) Date of publication and mention of the grant of the patent: **28.01.2026**
(21) Application number: 22190805.6
(22) Date of filing: 17.08.2022
(51) Int. Cl.: G05D 1/242, G05D 1/622, G01S 17/931, G05D 105/05, G05D 107/70, G05D 109/10, G05D 111/10

(54) **OBSTACLE DETECTION FOR A MINING VEHICLE**
HINDERNISERKENNUNG FÜR BERGBAUFAHRZEUG
DÉTECTION D'OBSTACLE POUR VÉHICULE MINIER

(43) Date of publication of application: 21.02.2024
(73) Proprietor: Sandvik Mining and Construction Oy, 33330 Tampere (FI)
(72) Inventor: PUURA, Jussi, 33311 Tampere (FI); von ESSEN, Tomi, 33311 Tampere (FI); SANERMA, Simo, 33311 Tampere (FI)
(74) Representative: Sandvik

(56) References cited:
- WO-A1-2014/148978
- WO-A1-2022/063406
- US-B1- 6 173 215

## Description

### FIELD

The present invention relates to obstacle detection, object analysis, and related control by mining vehicles.

### BACKGROUND

Mining or construction excavation worksites, such as underground hard rock or soft rock mines, may comprise areas for automated operation of mining vehicles, such as load and/or haul machines and drilling rigs. Such mining vehicles may comprise an unmanned vehicle, for example, remotely controlled from a control room, or a manned vehicle, such as a vehicle operated by an operator in a cabin of the vehicle.

Mining vehicles may be configured to perform at least some of tasks autonomously. An automated mining vehicle operating in an automatic mode may be configured to operate independently, but may be taken under external control at certain operation areas or conditions, such as during states of emergencies.

A route from a starting point to an end point may be beforehand planned for autonomous driving. In some systems, an experienced operator may teach an optimal path by driving the vehicle, or the route may be designed at least partially automatically on the basis of input parameters and a worksite model. Conditions in an underground worksite may change during mining operations, and affect drivability along the route. For example, a loose rock may cause stopping of an autonomous mining vehicle, and manual control by an operator. Such production interruptions negatively affect mining operations efficiency at the worksite. A safety system of a mining vehicle should be configured to prevent the mining vehicle hitting an obstacle causing damage or stopping the mining vehicle but avoid unnecessary stopping of the mining vehicle due to minor new obstacles.

WO2022063406 discloses a method, comprising: defining a dynamic obstacle detection zone for a vehicle configured to operate autonomously in an underground tunnel system of a worksite on the basis of the current speed and current steering angle of the vehicle, detecting an obstacle within the obstacle detection zone, controlling locking steering of the vehicle in response to the detected obstacle, and maintaining locked state of steering during braking of the vehicle in response to the detected obstacle.

WO2014148978 discloses analysing information regarding an obstacle according to rules for straddling the obstacle in relation to the ground clearance of the vehicle, and if the result of the analysis shows that the obstacle may be straddled by the vehicle, determining a first trajectory for the vehicle based at least on the position of the vehicle, the position of the obstacle and information about the ground clearance of the vehicle, so that the vehicle straddles the obstacle.

US6173215 discloses a method for responding to the detection of an obstacle in the path of a mobile machine as the mobile machine traverses the path at a work site. The method includes the steps of scanning a field of interest, detecting the presence of an obstacle, and determining a set of parameters as a function of the mobile machine, the obstacle, and the work site. The method also includes the steps of determining a level of predictability of motion of the obstacle, defining ranges of a plurality of zones as a function of the level of predictability and the parameters, and initiating an action in response to the obstacle being in one of the zones.

### SUMMARY

The invention is defined by the features of the independent claims. Some specific embodiments are defined in the dependent claims.

According to a first aspect, there is provided an apparatus, being configured to or comprising means configured for performing at least: assigning a set of obstacle analysis parameters for a mining vehicle, wherein the set of obstacle analysis parameters is specific to a portion of the mining vehicle, detecting, by an obstacle detection function of the mining vehicle, an obstacle candidate on the basis of processing scanning data from a scanner of the mining vehicle, performing an obstacle analysis on the basis of a determined size of the obstacle candidate and the set of obstacle analysis parameters assigned for the mining vehicle, to classify the obstacle candidate and determine if the obstacle candidate is an obstacle to be avoided, and providing, in response to the obstacle analysis indicating that the obstacle candidate is an obstacle to be avoided, an alarm or control signal to avoid the mining vehicle hitting the obstacle.

According to a second aspect, there is provided a method for a mining vehicle route planning, comprising: assigning a set of obstacle analysis parameters for a mining vehicle, wherein the set of obstacle analysis parameters is specific to a portion of the mining vehicle, detecting, by an obstacle detection function of the mining vehicle, an obstacle candidate on the basis of processing scanning data from a scanner of the mining vehicle, performing an obstacle analysis on the basis of a determined size of the obstacle candidate and the set of obstacle analysis parameters assigned for the mining vehicle, to classify the obstacle candidate and determine if the obstacle candidate is an obstacle to be avoided, and providing, in response to the obstacle analysis indicating that the obstacle candidate is an obstacle to be avoided, an alarm or control signal to avoid the mining vehicle hitting the obstacle.

According to a third aspect, there is provided an apparatus comprising at least one processor, at least one memory including computer program code, the at least one memory and the computer program code being configured to, with the at least one processor, cause the apparatus at least to perform the method or an embodiment of the method.

According to a fourth aspect, there is provided a computer program, a computer program product or (a non-tangible) computer-readable medium comprising computer program code for, when executed in a data processing apparatus, to cause the apparatus to perform the method or an embodiment thereof.

### BRIEF DESCRIPTION OF THE DRAWINGS

FIGURE 1 illustrates an example of a mining vehicle;
FIGURE 2 illustrates a method in accordance with some embodiments;
FIGURE 3 illustrates functions of a control unit in accordance with some embodiments;
FIGURE 4 illustrates a top view example of a mining vehicle performing a driving task;
FIGURE 5 illustrates functions of a control unit in accordance with some embodiments;
FIGURE 6 illustrates a top view example of a mining vehicle performing a driving task; and
FIGURE 7 illustrates an example apparatus capable of supporting at least some embodiments.

### EMBODIMENTS

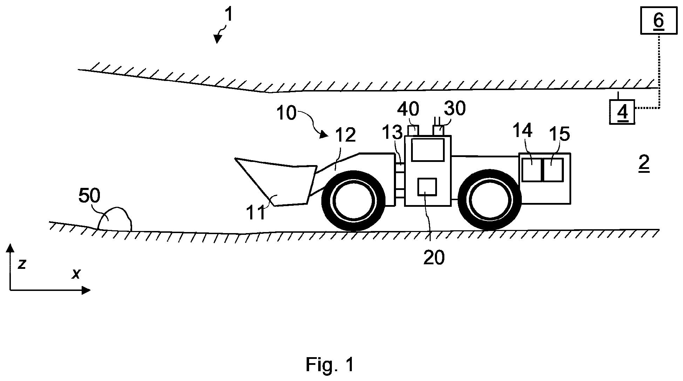

Figure 1 illustrates a simplified example of a portion of a mining worksite 1, in the present example comprising an underground tunnel portion or tunnel 2. The mining worksite may comprise an ore mine or a construction site, such as a railway or road tunnel site. However, it will be appreciated that a worksite may comprise also on-surface areas. The term underground mining vehicle herein refers generally to mobile work machines suitable to be used at least in operation of different kinds of underground mining or construction excavation worksites, such as lorries, dozers, dumpers, vans, mobile rock drilling or milling rigs, mobile reinforcement machines, and bucket loaders or other kind of mobile work machines which may be used in different kinds of excavation worksites.

The mining vehicle 10 is in the present example a loader or a load and haul (LHD) vehicle comprising a bucket 11 connected to a boom 12. The vehicle 10 may be, for example, an articulated vehicle comprising two body portions, which may be referred to as a front body portion (comprising the bucket 11 and the boom 12) and a rear body portion, connected by a joint 13. However, it will be appreciated that application of the presently disclosed features are not limited to any particular type of vehicle which may be used at excavation worksites. Some other examples of such a vehicle include inspection vehicles, autonomous inspection vehicles (AIVs), lorries, dumpers, vans, mobile rock drilling or milling rigs, or mobile reinforcement machines.

In the example of Figure 1, the vehicle 10 comprises a system 14 of pumps for generating hydraulic pressure for operating various parts of the machine, such as lifting the boom 12, turning the bucket 11, etc. The vehicle 10 may comprise one or more other sources of energy, such as an accumulator, a hydrogen container, a fuel tank, etc. The vehicle 10 may comprise a motor 15, such as a combustion engine or an electric motor. Power from the motor 15 may be provided by a crank shaft to front and/or rear wheels either directly or via a gear box. The drivetrain of the vehicle 10 may comprise, for example, motor 15, the crank shaft, and/or a transmission.

The vehicle 10 comprises at least one control unit 20 configured to control at least some functions and/or actuators of the vehicle. The control unit 20 may comprise one or more computing units/processors executing computer program code stored in memory. The control unit 20 may be connected to one or more other control units of a control system of the vehicle, for example, by a controller area network (CAN) bus. The control unit 20 may comprise or be connected to a user interface (UI) with a display device as well as an operator input interface. Such interfaces are usable for receiving operator commands and information to the control unit. It is to be appreciated that the control unit 20 may be configured to perform at least some of the below illustrated control features related to obstacles, or a plurality of control units or controllers may be applied to perform these features. It is to be appreciated that at least some of the control functionality may be implemented even outside the vehicle, for example, at a worksite management system.

The vehicle 10 may comprise a wireless communication device 30, by which the control unit 20 and/or another unit of control system of the vehicle 10 may be configured to establish a data connection. The data connection comprises at least one of: data reception, and/or data transmission. The data connection may be formed between the control system of the vehicle and at least one control device of a (mining operations) control system 6 external to the vehicle. The data connection may utilize a wireless connection provided by a base station or access node 4. The communication device 30 may thus be operatively connected to a communications system of the worksite, such as a wireless access system comprising a wireless local area network (WLAN) and/or a cellular communications network such as a 4G, 5G or some other generation cellular network.

The control system 6 may comprise or be connected to further network(s) and/or data processing system(s), such as a worksite management system, a cloud service, a data analytics system, an intermediate communications network, such as the internet, etc. The control system 6 may comprise or be connected to further device(s) or control unit(s), such as a handheld user unit, a vehicle unit, a worksite management device/system, a remote control and/or monitoring device, data analytics device, sensor system/device, etc.

The vehicle 10 may be unmanned. An unmanned vehicle may comprise a user interface to allow a user to control any of the functions of the vehicle, for example, steering. The vehicle may comprise an operator input interface in addition to the user interface or as an alternative to the user interface. Said interfaces of the vehicle may be located in a remote location from the vehicle and the vehicle may be remotely controlled. Examples of remote control include: control by an operator in the tunnel, or control by an apparatus within a control room at the worksite, or even control by an apparatus from a long distance away from the worksite via communications network(s). The vehicle 10 may be an automated vehicle, which in an autonomous operating or driving mode may operate/drive independently without requiring continuous user control. Such an automated vehicle may be taken under external control, for example, during states of emergencies. When the vehicle is in a manual driving mode, an operator drives the vehicle manually, by remote control or locally at the vehicle by operator controls. The operator may set the vehicle into a (default) automatic driving mode in which the vehicle is configured to automatically drive a specified route, for example, between a loading point and a dump shaft.

Apparatuses of the worksite, such as the control device(s) of the control system 6 and the mining vehicle 10, may be configured to store and use at least one worksite model representing current state and/or target state of the worksite environment. The worksite model may be an environment model or a map. The worksite model may be a 2D model or a 3D model indicative of surface profiles and obstacles at the worksite, at an area operated by mining vehicles, for example. In the case of an underground worksite, the worksite model may be a tunnel model indicative of tunnel profiles.

In some embodiments, the control system 6 and/or the mining vehicle 10 is configured to store a 3D (tunnel) model of the underground worksite, illustrating floors, walls, and ceilings of the tunnel network. The 3D model may comprise or be formed based on point cloud data generated on the basis of the scanning. In some other embodiments, the 3D model may be stored in some other format, such as a mesh model comprising vertices, edges and faces. In some embodiments, the 3D model may be a design model or may be generated on the basis of a design model, such as a CAD model, created by a mine designing software or a 3D model created on the basis of tunnel lines and profiles designed in a drill and blast design software.

The vehicle 10 may comprise one or more scanning units, or scanners 40, configured to perform scanning of environment around the vehicle. In some embodiments, the scanning results are applied to detect the position and orientation of the vehicle and one or more further elements thereof, such as the position and orientation of the scanner 40, or the bucket 11.

The control unit 20 may be configured to compare scanned tunnel profile data to reference profile data stored in the worksite model. The control unit 20 may be configured to position the mining vehicle on the basis of finding a match in a surface profile indicated by the scanning data and surface profile indicated by the worksite model. The control unit 20 may be configured to correct positioning by dead-reckoning on the basis of scanning based positioning. In some embodiments, the scanning results are applied to detect position and orientation of the mining vehicle and one or more further elements thereof, such as a position of the scanner 40 or the bucket 11.

The scanner 40 may be a 3D scanner configured to generate 3D scanning data or point cloud data. The 3D scanner may comprise a light detection and ranging (LIDAR) detector device, a radar device, or a camera based detector device, for example.

A driving plan, or a route plan, may define a route to be driven by the vehicle 10 and may be used as an input for an automatic driving control of the vehicle. Further, such a plan may be used as a part of a task or planned task. When the task comprises a route plan, the plan may form the route to be travelled during the task. The plan may be generated offline and off-site, for example, in an office. The plan may be generated on-board the vehicle, for example, by a teaching drive. The plan may define a start point, an end point, and a set of route points for the automatic drive.

The mining vehicle 10 may comprise an obstacle detection/avoidance system or function. The obstacle detection system is configured to monitor driving path of the mining vehicle to detect obstacles 50. The mining vehicle needs to be configured such as to avoid collision to obstacles that may cause danger and/or damage. Minor objects can be ignored, but a warning or alarm signal causing stopping of the autonomously driving vehicle is needed for dangerous objects.

There are now provided improvements to facilitate improved object processing for a mining vehicle, by an object analysis configured to classify objects based on mining vehicle portion specific obstacle analysis parameters.

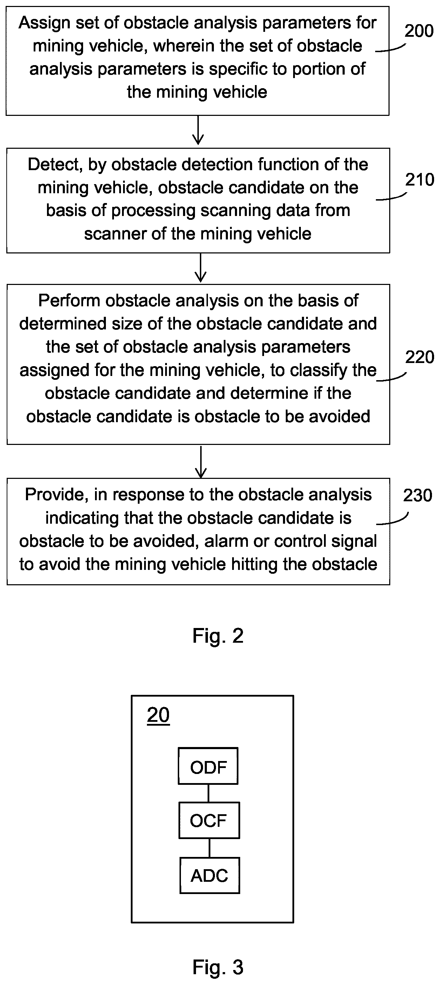

Figure 2 illustrates a method according to some embodiments. The method may be performed by an apparatus, in some embodiments a control apparatus configured to control autonomous driving related operations of a mining vehicle. The method may be performed by a mining vehicle and a controlling apparatus thereof, such as the mining vehicle 10, and by the control unit 20 thereof, respectively. The method may be a computer-implemented method.

Block 200 comprises assigning a set of obstacle analysis parameters for a mining vehicle. The set of obstacle analysis parameters is specific to a portion of the mining vehicle. The parameters may be defined dynamically during driving of the mining vehicle. The mining vehicle may be performing an autonomous driving task when block 200 is entered.

Block 210 comprises detecting, by an obstacle detection function of the mining vehicle, an obstacle candidate on the basis of processing scanning data from a scanner of the mining vehicle.

Block 220 comprises performing an obstacle analysis on the basis of a determined size of the obstacle candidate and the set of obstacle analysis parameters assigned for the mining vehicle, to classify the obstacle candidate and determine if the obstacle candidate is an obstacle to be avoided.

Block 230 comprises providing, in response to the obstacle analysis indicating that the obstacle candidate is an obstacle to be avoided, an alarm or control signal to avoid the mining vehicle hitting the obstacle. For example, the control signal may be an alarm or stop signal to an automatic driving controller configured to control or cause stopping or deceleration of the mining vehicle in response to the control signal.

The obstacle candidate may be an object detected in the scanning data or a set of measurements selected by the obstacle candidate detection function from among measurements of the scanning data. Determining the size may refer to determining at least some dimension or reach of the obstacle in a given direction, that may affect or prevent drivability of the mining vehicle. The apparatus performing the method may be configured to determine the size in block 220, or in a further block between blocks 210 and 220. This may comprise determining vertical direction size or height of the obstacle. Determining the size may also comprise determining horizontal direction size or width of the object. In a simple example, the obstacle analysis may comprise comparing the at least one determined size or dimension to at least one threshold parameter value assigned for the mining vehicle portion. If the threshold parameter value is exceeded, the apparatus may be configured to assign the obstacle with an associated classification, and block 230 is according to the entered if this is configured for the assigned classification. The autonomous driving task may refer to route control information provided to the mining vehicle, such as start and end point of the route.

The set of obstacle analysis parameters may be vehicle type specific. The parameters may be assigned or adapted on the basis of a user input via a user interface of the mining vehicle 10 or a user interface of the control system 6. Additionally or alternatively, the parameters may be assigned or adapted dynamically and automatically during a driving task, based on input data and parameter assigning or adaptation criterion, some examples being further illustrated below.

The set of obstacle analysis parameters may comprise a set of adaptable trigger conditions defining two or more obstacle severity classes (or classifications) to control triggering of an associated action due to the obstacle. In a simple example, the obstacle may be classified in block 220: to be avoided, to be warned of, or to be ignored. Each of the classes may be associated with at least one triggering parameter value, such as a threshold value or range for the size of the obstacle.

The severity classes may be defined by the mining vehicle portion specific obstacle analysis parameters. Alternatively, the method of Figure 2 may be applied without the obstacle analysis parameters being specific to a mining vehicle portion. In such embodiments, the obstacle analysis parameters may be specific to the mining vehicle and define two or more obstacle severity classes.

The adaptable trigger conditions and obstacle severity classes may be associated with different output actions. In a simple example, a first criterion may be defined by a first threshold value, exceeding of which triggers a stop or emergency signal in block 230. A second criterion may be defined by a second threshold value, exceeding of which triggers a warning or a speed reduction control signal in block 230. The threshold values may be associated with obstacle size. Block 220 may thus comprise a set of obstacle size comparisons to threshold values. For example, if the obstacle size does not exceed the first threshold value, the procedure compares the size to the second first threshold value. If none of the threshold values (triggering block 230) determined by the set of obstacle analysis parameters is exceeded, the mining vehicle may continue driving without interruptions. The obstacle analysis procedure may return to process new scanning data and further obstacle candidate and return in block 210.

The apparatus may be configured to perform 220 the obstacle analysis based on at least one of the following parameters: height of the obstacle candidate, area of cross-section of the obstacle candidate, or another dimension of the obstacle candidate. Hence, the determination of the size may comprise computing cross-sectional area in a direction from the scanner, for example based on point cloud data indicative of measurements hitting the obstacle.

In addition to obstacle size, also other inputs and obstacle analysis parameters may be applied. For example, slope of surface ahead in the driving direction of the mining vehicle, for example in front of the obstacle candidate. The slope of the surface may be defined on the basis of analyzing 3D point cloud data, based on setting a plane along detected floor points in the scanning data, for example.

In some embodiments, the scanning data comprises point cloud data, which may be generated on the basis of scanning the environment by a 3D scanner. The apparatus may be configured to, based on measurements in the scanning data, select a set of measurement points for obstacle candidate detection and/or obstacle analysis, in some embodiments points of a point cloud. The selected set of measurements may be further processed during the obstacle analysis. In an example embodiment, neighboring measurement points of a point being evaluated or analyzed are selected and analyzed. For example, neighboring points within a radius (from the analyzed point) selected from 10-100 cm, in a further embodiment 20-50 cm, are selected in the set of measurement points for analysis.

The apparatus may be configured to apply a vehicle portion specific obstacle height threshold. Block 230 may be entered in response to detecting the height of the detected obstacle exceeding the obstacle height threshold.

In a simple obstacle candidate analysis example, the apparatus may be configured to compare defined vertical positions of measurement points in the selected set of measurements. An undermost measurement point may be selected to represent floor or ground level. Vertical positions of other points in the set are analyzed and compared to that of the undermost measurement point/level. If difference of one or more points and the lowermost point/level exceeds an obstacle avoidance height threshold (defined in the set of obstacle analysis parameters), the obstacle is determined as an obstacle to be avoided, and block 230 is entered. It is to be noted that there may be a plurality of such obstacle height threshold values, to classify the obstacle into different categories or severity classes.

The apparatus may be configured to adapt the obstacle analysis parameters within preconfigured ranges, and apply minimum and/or maximum values that cannot be exceeded, to avoid setting clearly dangerous or erroneous conditions. For example, a non-adaptable maximum value may be preconfigured for obstacle height for the mining vehicle type in question. In this example, the system may be configured to prevent assigning obstacle height parameter in block 200 for triggering an alarm or stop signal above the preconfigured maximum obstacle height.

The present features facilitate to adapt, on the basis of current worksite environment and/or vehicle status, for example, triggering points to determine obstacle classes if an obstacle candidate is a dangerous obstacle or not. By adapting the triggering points to tolerate larger obstacles, which still do not damage the vehicle, unnecessary alarms and production interruptions due to minor obstacles may be reduced. The present features facilitate to adapt obstacle analysis and outcome thereof for different portions of the mining vehicle. For example, obstacle analysis may be adapted for a work implement used in the vehicle, or for different articulated body portions of the vehicle. A detected object may be classified based on its relevance to a particular portion of the mining vehicle. Object classification may be performed individually for a plurality of mining vehicle portions. If outcome of at least one of the object analysis procedures is that the obstacle need to be avoided, block 230 is entered. The obstacle detection system may also adapt to change in worksite environment conditions, such as road conditions, based on adaptable alarm trigger level or conditions.

The portion of the mining vehicle may be a work implement of the mining vehicle. Examples of such work implements include the bucket 11 and/or the boom 12 of the vehicle 10, a drilling boom or a drilling unit of a drilling rig, or a platform of a dumper.

The apparatus performing the method, such as the control unit 20, may be configured to assign the set of obstacle analysis parameters to the mining vehicle on the basis of determined position of the work implement in relation to a body of the mining vehicle.

The apparatus may be configured to determine the position of the work implement in relation to the body of the vehicle on the basis of information from one or more sensors sensing orientation of work implement, or based on work implement status data of a vehicle control system. In a further example, the apparatus is configured to define the position of the work implement in relation to the body on the basis of analysing the scanning data, such as image data or point cloud data, indicative of a reference point of the work implement and a reference point of the body.

The apparatus may be configured to adapt a vehicle portion specific obstacle size parameter based on determined vertical direction position of the work implement in relation to the body of the mining vehicle. One or more threshold values, such as obstacle height parameter(s), for obstacle classification(s)) may thus be dependent on, and adapted based on, distance between a reference point of the work implement and a reference point of the body. For example, the threshold values are adapted in response to moving the bucket 11 to or from an extreme position of the bucket.

The apparatus may be configured to determine driving status data indicative of current driving parameters of the mining vehicle. The set of obstacle analysis parameters for the mining vehicle may be dynamically assigned or adapted in block 200 on the basis of determined driving status data of the mining vehicle. The driving status data may comprise at least one of speed of the mining vehicle, and driving direction of the mining vehicle. The driving status data may be received from a control system of the mining vehicle, such as from an autonomous driving controller via a bus system of the vehicle.

The apparatus may be configured to detect a path condition during driving, in some embodiments when performing the autonomous driving task. The set of obstacle analysis parameters may be dynamically assigned or adapted in block 200 based on the detected path condition. The apparatus may thus be configured to enter or return to block 200 in response to detecting a triggering path condition. The path condition may comprise one or more carriageway or tunnel floor surface conditions, such as soft or wet path, or a rutted path. The path condition may be detected on the basis of environment scanning by the scanner and/or other sensors of the mining vehicle.

With reference to Figure 3, the mining vehicle 10 may comprise an obstacle detection function (ODF), an obstacle control function (OCF), and an autonomous driving controller (ADC), which may also be referred to as autonomous driving control function. The control unit 20 may be configured to perform at least some of these functions. Alternatively, multiple control units, for example separate control unit for each function, may be applied. It is to be appreciated that there may be also further functions related to autonomous driving, such as a positioning function.

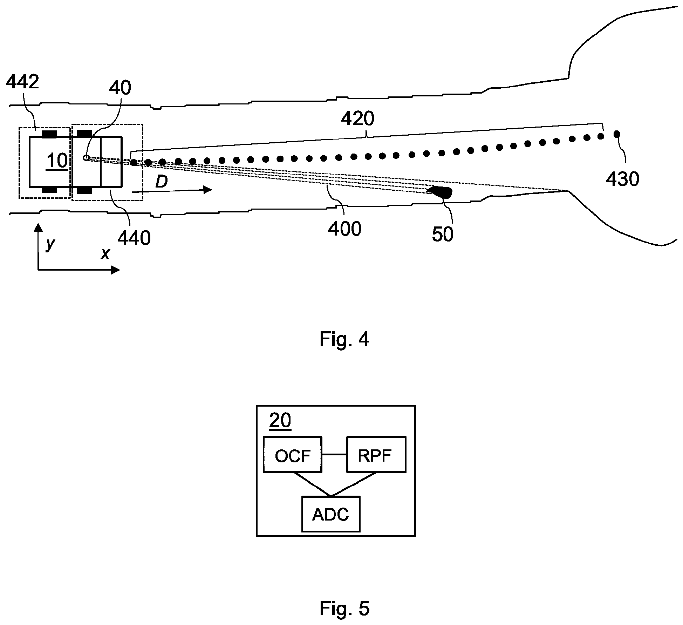

The ODF may be configured to receive the scanning data from the scanner 40, or from a scanner application or function providing scanning data based on environment scanning by the scanner. With reference to the example Figure 4, the scanning data may be based on a set of scanning signals 400 by the scanner. The scanning data may indicate presence of obstacle 50 in driving direction D on a route of the autonomous driving task, comprising a set of route points 420 to an end point 430.

The ODF and the OCF may be part of (or operationally connected to) a collision avoidance system (CAS). The ODF may be configured to perform collision examination based on scanning data received from at least scanner 40. In another embodiment, the OCF is configured to perform the collision examination based on an indication of the detected obstacle from the ODF, and control further actions based on the collision examination. The scanning data may be from a plurality of scanners. For example, one scanner may cover a rear portion of the vehicle and another scanner may cover a front section of the vehicle by directional beams.

The ODF may be configured to process the scanning data, which may be indicative of distances to tunnel portions and further obstacles, or positions thereof, to detect obstacles in a detection area ahead in the driving direction D of the vehicle. To detect the obstacles, the scanning data may be processed in block 210 or already before block 210. The processing may be based on obstacle detection control parameters, such as control parameters controlling defining detection area and/or safety area around the vehicle.

The apparatus, such as the ODF or the OCF, may be configured to apply one or more obstacle detection or safety areas around the vehicle. At least one safety area or envelope 440 may be defined at least on sides of the vehicle 10. Figure 4 illustrates that a first safety envelope 440 is assigned for first/front body portion of the vehicle and a second safety envelope 442 is assigned for the second/rear body portion.

The ODF or the OCF may be configured to determine or predict, based on the positions of at least some of the route points 420, obstacle detection parameters, and the determined position of the obstacle 50, if an obstacle candidate will fall into the safety area when the vehicle follows the route. If yes, block 210 may be entered. If not, the ODF may continue processing new scanning data. However, it is to be noted that the obstacle candidate detection does not need to involve future route point based examination, but an object or measurement point set may be detected as an obstacle candidate to be further analyzed based on processing the scanning data indicative of the object/measurement point set, without using information of the future path of the vehicle.

In an example embodiment, the apparatus is configured to apply a warning area and a collision area or envelope. If an obstacle to be avoided is detected in the warning area, a warning may be issued, and speed of the vehicle may be reduced, for example. If an obstacle to be avoided is detected within the collision area, the vehicle will hit or be too close to the obstacle and further safety action is required.

The OCF may be configured to determine if an obstacle candidate needs to be avoided or bypassed, on the basis of information of the obstacle received from the ODF. The OCF may be configured to control or cause stopping of the mining vehicle in response to detecting an object classified as an obstacle to be avoided. The OCF may be configured to perform block 220 and classify an obstacle candidate based on the set of obstacle analysis parameters. This may be performed upon detecting an obstacle candidate that will fall into a safety area of the vehicle (or a portion of the vehicle). In a simple example, the OCF may be configured to compare vertical z direction size of the obstacle candidate detected by the ODF to an associated threshold parameter of the vehicle portion. If the threshold value is exceeded, the obstacle candidate is classified as obstacle to be avoided (for the vehicle portion in question). If the obstacle candidate is classified as obstacle to be avoided, block 230 may be entered. In another embodiment, the OCF defines the size of the obstacle candidate based on the obstacle information from the ODF. In a still another embodiment, the ODF decides whether to enter the block 230 on the basis of obstacle analysis information from the ODF. The ODF may further determine if, or which, alarm or control signal is caused in response to the obstacle classification.

The apparatus may be configured to adapt or assign vertical direction (z) reach of the safety zone/envelope 440, 442 based on determined vertical direction position of the work implement in relation to the body of the mining vehicle 10. In one embodiment, wall monitoring is switched on or off depending on such determined vertical direction position. The safety zone height (and hence monitoring area height) may thus be dependent on, and adapted based on, distance between a reference point of the work implement and a reference point of the body. For example, the safety zone height (and hence monitoring area height) is increased in response to raising the bucket 11. The bucket may thus define the upmost part of the vehicle and define the vertical direction upper limit for monitoring for obstacles and analyzing thereof.

The apparatus may be configured to adapt or assign horizontal direction reach of the safety zone/envelope 440, 442 based on determined driving status of the mining vehicle. For example, the width of the safety zone is increased in response increasing speed of the vehicle.

The position of the obstacle candidate may be determined, in or before block 210, in a worksite reference system, in some embodiments the global coordinate system. The ODF may be configured to determine 3D position information of the obstacle. The ODF may be configured to determine position of the obstacle in relation to the scanner 40. The scanner 40 may be positioned on the basis of environment scanning, as indicated above. The position of the obstacle in the global coordinate system may then be determined on the basis of the determined position in relation to the scanner.

The apparatus may be configured to, in response to the obstacle analysis indicating that the obstacle candidate is an obstacle to be avoided, or in response to the control signal, generate a new or updated route for the mining vehicle to bypass the obstacle. The new or updated route may be generated on the basis of position information of the vehicle, position of the obstacle, and a worksite model indicative of limitations for route generation.

Figure 5 illustrates that the OCF may be connected to a route planning function (RPF). The OCF may be configured to connect the RPF in or after block 230, in response to detecting that the obstacle is to be avoided. The OCF may transmit a control signal triggering the RPF to determine a new route to bypass the obstacle, if possible. Thus, instead of causing the mining vehicle to instantly stop, route recalculation may be attempted to avoid the obstacle.

The RPF of the vehicle may be configured to define route points to be followed by the vehicle in order to execute the driving task and bypass the detected obstacle.

In some example embodiments, the ADC is configured to control navigation of the vehicle along the route based on route points provided by the RPF. The ADC may be configured to define steering control signals to other units or actuators of the mining vehicle based on position information of the route points, such as x and y coordinates in global coordinate system. Thus, the ADC may define and provide control signals after block 230 so that the mining vehicle autonomously drives along the route point as to avoid obstacles during autonomous driving towards a destination point. The route plan may comprise also other parameters which the ADC may be configured to control.

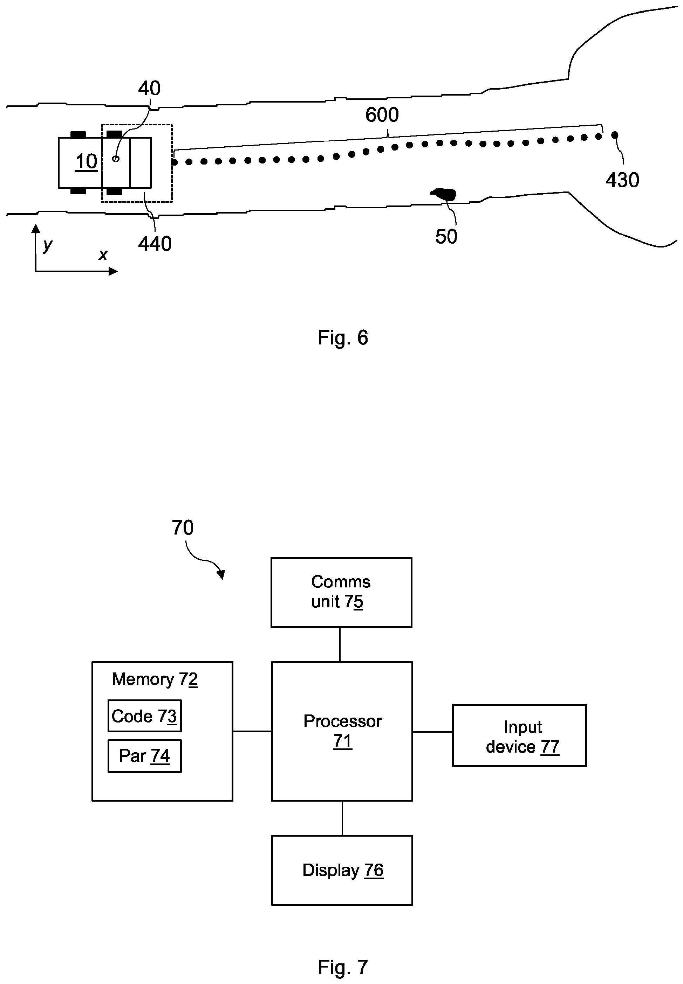

Figure 6 illustrates the vehicle after a new/second route, with a new/second set of route points 600, has been successfully generated after the block 230 for the vehicle initially driving a first route indicated by the route points 420. At least some of the route points of the set 600 are positioned such that the vehicle will pass the obstacle 50 without the obstacle falling into the safety zone 440, 442.

This enables to avoid the obstacles by dynamic re-routing performed instantly on-board upon detecting the obstacle. Thus, it may be possible to avoid stopping the vehicle, but the vehicle may continue driving, potentially with reduced speed, until the new route is computed and commissioned. Delays affecting production efficiency may be reduced, for example, since need for manual intervention and control by the operator may be avoided.

It will be appreciated that there are a number of implementation options for generating the new route and new route points after block 230. The second route may be a completely new route, defined after block 230 further based on route end point position information. The RPF may be configured to compute route points of the second set from the position of the vehicle to the end point of the first route.

In another embodiment, only partial route re-generation is performed after block 230. The second set of route points may comprise new route points replacing route points of the first set of route points in proximity to the obstacle.

The RPF may be configured to generate the route points further on the basis of vehicle property parameter data. For example, the vehicle property parameters may comprise vehicle dimensions parameter data indicative of at least dimensions of the vehicle and/or safety parameters, such as size of the safety or collision area required at sides of the vehicle. The RPF may be configured to generate the route points at a predefined interval, for example 0.5m.

Based on the vehicle property parameter data, the RPF may be configured to determine positions of the route points such that they allow adequate safety margin between a side of the vehicle and the obstacle, and also between another side of the vehicle and tunnel wall (or an obstacle) at the other side. If no such route points are found, the RPF may be configured to indicate this to the ADC and/or to a user interface to notify the operator. The ADC may be configured to control stopping of the vehicle in response to such indication. The ADC or the RPF may be configured to indicate interruption of the driving task and stopping of the vehicle to an operator via a UI, for example a UI of the control system. The UI may be provided with further information of the detected obstacle, for example a 2D or 3D UI view indicating the position and size of the obstacle in the worksite model.

The position information of the mining vehicle for the new route computation may be the current position of the mining vehicle, or a future expected position of the mining vehicle. The RPF may be configured to select the current position or the expected position as starting point of the new route computation.

An indication of the determined obstacle height may be applied in the new route generation, for example the respective point may be omitted from available path options or availability of the point may be determined based on the height indication.

As an example, consider a vehicle that has width W, for example 2 meters, and has a ground clearance value G, for example 20 centimeters. The apparatus may be configured to define, for path planning, a subset of the floor model where this vehicle can drive without risk of hitting obstacles. The subset can be found from the floor model augmented with the local obstacle height *h*. The apparatus may be configured to define, for every point *p* in the floor model, points at a radius of W/2 based on the width W of the vehicle in question. The apparatus may be configured to, if any of the points in the radius has an obstacle height h greater than the ground clearance G, assign such point zero for drivability by this vehicle. If none of the points has an obstacle height higher than G, the apparatus may be configured to assign true or one for drivability of the point. The result may be a binary map indicating drivability of the vehicle.

The apparatus, such as the control unit 20 and further the ADC, may be configured to control, in response to detecting 210 the obstacle and/or in block 230, reduction of speed of the mining vehicle. For example, the ODF or the OCF may be configured to transmit an indication of the obstacle or a speed reduction request to the ADC in response to block 210 or 230. In response to such indication or request, the ADC may be configured to reduce the speed to a predefined target speed.

The apparatus, such as the control unit 20, may be configured to update the worksite model on the basis of the scanning data from the scanner 40. The apparatus may be configured to update a worksite model used for autonomous driving of the mining vehicle, to include information indicative of the position of the obstacle, in response to the obstacle analysis indicating that the obstacle candidate is an obstacle to be avoided. The second route may be generated based on the updated worksite model.

The vehicle 10 may comprise a simultaneous localization and mapping (SLAM) unit. Such a unit is configured to both position the vehicle and (augment) map the environment, such as the geographical features of the environment, based on (2D or 3D) scanning information while the vehicle is driving, for example, in an automatic mode. The SLAM unit may be configured to update the worksite model based on the detected obstacle.

The apparatus may be configured to apply a drivability map, which may also be referred to as traversability map, as the worksite model (used to generated the new route and include information on the obstacles). The drivability map comprises drivability data indicative of drivability of a vehicle at a set of locations in the tunnel. The drivability map based on a sub-set of points of a 3D worksite model. The drivability map, which may also be referred to as drivability model, comprises a plurality of points augmented with drivability data. The RPF may be configured to generate the new route for the vehicle on the basis of the drivability map. The RPF may be configured to update the drivability map to include information on the obstacle in response to the obstacle analysis indicating that the obstacle candidate is an obstacle to be avoided.

In some embodiments, the worksite model comprises or is based on a floor model generated on the basis of a 3D worksite model. The term floor model refers generally to a model comprising a set of points indicative of the tunnel floor at least in horizontal plane, i.e. 2D or *x, y* coordinates. Such points may also be referred to as floor points. More efficient path calculation or location tracking of vehicles may be achieved by a map that only comprises the floor of the mine, with drivability attributes associated with some or all of the floor points. The drivability map may comprise floor point records of floor points of the floor model, wherein at least some of the floor point records comprise augmented drivability data for the vehicle. The apparatus may be configured to apply the drivability map for vehicle path definition and/or manoeuvre control along the floor defined by the floor points.

The drivability data may comprise vehicle specific drivability data, specific to an automated or semi-automated vehicle or vehicle type. The path and/or the drivability data may be generated based on vehicle property data indicative of at least dimensions of the vehicle of the type of the vehicle. Appropriate vehicle property data may be retrieved from a memory or another device on the basis of vehicle or vehicle type identifier received for drivability map generation and/or path planning. For example, load&haul devices of a given series or product family may have particular common dimensions, which are indicated in associated vehicle property data and used to generate the drivability data and/or the path information for these vehicles.

The drivability map may indicate points in the sub-set of points of the worksite model traversable by the vehicle or the vehicle type. For example, the drivability map may comprise a sub-set of points, such as floor points, drivable by the vehicle or vehicle type, or an indication of drivability (drivable or non-drivable) for a vehicle or vehicle type is included in at least some points of the drivability map.

In some embodiments, height of the obstacle (defined as an obstacle to be avoided) is included in the drivability data or used for generating the drivability data. The height of the obstacle may be as defined in or before block 220.

An electronic device comprising electronic circuitries may be an apparatus for realizing at least some embodiments illustrated above, such as the method illustrated in connection with Figure 2. The apparatus may be comprised in at least one computing device connected to or integrated into a control system of the mining vehicle. Such control system may be an intelligent on-board control system controlling operation of various sub-systems of the mining vehicle, such as a hydraulic system, a motor, a rock drill, etc. Such control systems are often distributed and include many independent modules connected by a bus system of controller area network (CAN) nodes, for example.

Figure 7 illustrates a simplified example apparatus capable of supporting at least some embodiments of the present invention. Illustrated is a device 70, which may be configured to carry out at least some of the embodiments relating to the obstacle processing related operations illustrated above. In some embodiments, the device 70 comprises or implements the control unit 20.

Comprised in the device 70 is a processor 71, which may comprise, for example, a single- or multi-core processor. The processor 71 may comprise more than one processor. The processor may comprise at least one application-specific integrated circuit, ASIC. The processor may comprise at least one field-programmable gate array, FPGA. The processor may be configured, at least in part by computer instructions, to perform actions.

The device 70 may comprise memory 72. The memory may comprise random-access memory and/or permanent memory. The memory may be at least in part accessible to the processor 71. The memory may be at least in part comprised in the processor 71. The memory may be at least in part external to the device 70 but accessible to the device. The memory 72 may be means for storing information, such as parameters 74 affecting operations of the device. The parameter information in particular may comprise the obstacle analysis parameters and further parameter information affecting, for example obstacle detection and autonomous mining vehicle control related features, such as threshold values.

The memory 72 may be a non-transitory computer readable medium comprising computer program code 73 including computer instructions that the processor 71 is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The processor may, together with the memory and computer program code, form means for performing at least some of the above-illustrated method steps in the device.

The device 70 may comprise a communications unit 75 comprising a transmitter and/or a receiver. The transmitter and the receiver may be configured to transmit and receive, respectively, i.a. data and control commands within or outside the mining vehicle. The transmitter and/or receiver may be configured to operate in accordance with global system for mobile communication, GSM, wideband code division multiple access, WCDMA, long term evolution, LTE, 3GPP new radio access technology (N-RAT), wireless local area network, WLAN, and/or Ethernet standards, for example. The device 70 may comprise a near-field communication, NFC, transceiver. The NFC transceiver may support at least one NFC technology, such as NFC, Bluetooth, or similar technologies.

The device 70 may comprise or be connected to a UI, such as a UI of the control unit 20 of the vehicle 10. The UI may comprise at least one of a display 76, a speaker, an input device 77 such as a keyboard, a joystick, a touchscreen, and/or a microphone. The UI may be configured to display views on the basis of above illustrated embodiments. A user may operate the device and control at least some of above illustrated features. In some embodiments, the user may control the device 70 or the associated vehicle 10 via the UI, for example to manually operate a boom, change operation mode to and from autonomous driving, change display views, modify parameters 74, in response to user authentication and adequate rights associated with the user, etc.

The device 70 may further comprise and/or be connected to further units, devices and systems, such as one or more sensor devices sensing environment of the device 70 and/or sensor devices detecting position of a joint.

The processor 71, the memory 72, the communications unit 75 and the UI may be interconnected by electrical leads internal to the device 70 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

The apparatus, such as the device 70, the mining vehicle 10, or the control unit 20, may be configured at least to: assign a set of obstacle analysis parameters for a mining vehicle, wherein the set of obstacle analysis parameters is specific to a portion of the mining vehicle, detect, by an obstacle detection function of the mining vehicle, an obstacle candidate on the basis of processing scanning data from a scanner of the mining vehicle, perform an obstacle analysis on the basis of a determined size of the obstacle candidate and the set of obstacle analysis parameters assigned for the mining vehicle, to classify the obstacle candidate and determine if the obstacle candidate is an obstacle to be avoided, and provide, in response to the obstacle analysis indicating that the obstacle candidate is an obstacle to be avoided, an alarm or control signal to avoid the mining vehicle hitting the obstacle.

The apparatus may be the mining vehicle or included in the mining vehicle. The portion of the mining vehicle may be a work implement of the mining vehicle. The set of obstacle analysis parameters may comprise a set of adaptable trigger conditions defining two or more obstacle severity classes.

The apparatus may be configured to assign the set of obstacle analysis parameters for the mining vehicle on the basis of determined position of the work implement in relation to a body of the mining vehicle.

The apparatus may be configured to perform the obstacle analysis based on at least one of: height of the obstacle candidate, area of cross-section of the obstacle candidate, and slope of surface in front of the obstacle candidate.

The apparatus may be configured to determine driving status data indicative of current driving parameters of the mining vehicle, and dynamically assign the set of obstacle analysis parameters on the basis of determined driving status data of the mining vehicle.

The apparatus may be configured to assign the set of set of obstacle analysis parameters while the mining vehicle is performing the autonomous driving task.

The apparatus may be configured to detect a path condition when performing the autonomous driving task, and assign or adapt the set of obstacle analysis parameters on the basis of the detected path condition.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention as defined in the claims.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

## Claims

1. An apparatus, comprising at least one processor and at least one memory including computer program code, the at least one memory and the computer program code configured to, with the at least one processor, cause the apparatus at least to perform:
- detect a path condition while a mining vehicle is performing an autonomous driving task,
- assign (200), on the basis of the detected path condition, a set of obstacle analysis parameters for the mining vehicle (10) while the mining vehicle is performing the autonomous driving task, wherein the set of obstacle analysis parameters is specific to a portion of the mining vehicle,
- detect (210), by an obstacle detection function of the mining vehicle, an obstacle candidate on the basis of processing scanning data from a scanner (40) of the mining vehicle,
- perform (220) an obstacle analysis on the basis of a determined size of the obstacle candidate and the set of obstacle analysis parameters assigned for the mining vehicle, to classify the obstacle candidate and determine if the obstacle candidate is an obstacle to be avoided, and
- provide (230), in response to the obstacle analysis indicating that the obstacle candidate is an obstacle to be avoided, an alarm or control signal to avoid the mining vehicle hitting the obstacle.

2. The apparatus of claim 1, wherein the portion of the mining vehicle is a work implement (11) of the mining vehicle.

3. The apparatus of claim 2, wherein the at least one memory and the computer program code are configured to, with the at least one processor, cause the apparatus to assign (200) the set of obstacle analysis parameters for the mining vehicle (10) on the basis of determined position of the work implement in relation to a body of the mining vehicle.

4. The apparatus of any preceding claim, wherein the set of obstacle analysis parameters comprises a set of adaptable trigger conditions defining two or more obstacle severity classes.

5. The apparatus of any preceding claim, wherein the at least one memory and the computer program code are configured to, with the at least one processor, cause the apparatus to perform (220) the obstacle analysis based on at least one of: height of the obstacle candidate, area of cross-section of the obstacle candidate, and slope of surface in front of the obstacle candidate.

6. The apparatus of any preceding claim, wherein the at least one memory and the computer program code are configured to, with the at least one processor, cause the apparatus to determine driving status data indicative of current driving parameters of the mining vehicle, and dynamically assign (200) the set of obstacle analysis parameters on the basis of determined driving status data of the mining vehicle.

7. The apparatus of any preceding claim, wherein the at least one memory and the computer program code are configured to, with the at least one processor, cause the apparatus to detect the path condition on the basis of environment scanning by the scanner (40) of the mining vehicle and/or other sensors of the mining vehicle (10).

8. The apparatus of any preceding claim, wherein the path condition comprises one or more carriageway or tunnel floor surface conditions.

9. A mining vehicle (10), comprising the apparatus of any preceding claim.

10. A method for controlling a mining vehicle, the method comprising:
- detect a path condition while a mining vehicle is performing an autonomous driving task,
- assigning (200), on the basis of the detected path condition, a set of obstacle analysis parameters for the mining vehicle (10) while the mining vehicle is performing the autonomous driving task, wherein the set of obstacle analysis parameters is specific to a portion of the mining vehicle,
- detecting (210), by an obstacle detection function of the mining vehicle, an obstacle candidate on the basis of processing scanning data from a scanner (40) of the mining vehicle,
- performing (220) an obstacle analysis on the basis of a determined size of the obstacle candidate and the set of obstacle analysis parameters assigned for the mining vehicle, to classify the obstacle candidate and determine if the obstacle candidate is an obstacle to be avoided, and
- providing (230), in response to the obstacle analysis indicating that the obstacle candidate is an obstacle to be avoided, an alarm or control signal to avoid the mining vehicle hitting the obstacle.

11. The method of claim 10, wherein the set of obstacle analysis parameters for the mining vehicle (10) is assigned on the basis of determined position of a work implement of the mining vehicle in relation to a body of the mining vehicle.

12. The method of claim 10 or 11, wherein the obstacle analysis is based on at least one of: height of the obstacle candidate, area of cross-section of the obstacle candidate, and slope of surface in front of the obstacle candidate.

13. The method of any one of claims 10 to 12, comprising: determining driving status data indicative of current driving parameters of the mining vehicle, and dynamically assigning (200) the set of obstacle analysis parameters on the basis of determined driving status data of the mining vehicle.

14. A computer program comprising code for, when executed in a data processing apparatus, to cause a method in accordance with claim 10 to 13 to be performed.

## Patentansprüche

1. Einrichtung, die mindestens einen Prozessor und mindestens einen Speicher, der Computerprogrammcode beinhaltet, umfasst, wobei der mindestens eine Speicher und der Computerprogrammcode dazu konfiguriert sind, mit dem mindestens einen Prozessor die Einrichtung dazu zu veranlassen, mindestens Folgendes durchzuführen:
- Erfassen einer Pfadbedingung während ein Bergbaufahrzeug eine autonome Fahraufgabe durchführt,
- Zuweisen (200), auf der Basis der erfassten Pfadbedingungen, eines Satzes von Hindernisanalyseparametern für das Bergbaufahrzeug (10), während das Bergbaufahrzeug die autonome Fahraufgabe durchführt, wobei der Satz von Hindernisanalyseparametern spezifisch für einen Teil des Bergbaufahrzeugs ist,
- Erfassen (210), durch eine Hinderniserfassungsfunktion des Bergbaufahrzeugs, eines Hinderniskandidaten auf der Basis einer Verarbeitung von Abtastdaten von einem Scanner (40) des Bergbaufahrzeugs,
- Durchführen (220) einer Hindernisanalyse auf der Basis einer bestimmten Größe des Hinderniskandidaten und des Satzes von Hindernisanalyseparametern, die dem Bergbaufahrzeug zugewiesen sind, um den Hinderniskandidaten zu klassifizieren und zu bestimmen, ob es sich bei dem Hinderniskandidaten um ein zu vermeidendes Hindernis handelt, und
- Bereitstellen (230), infolgedessen, dass die Hindernisanalyse angibt, dass es sich bei dem Hinderniskandidaten um ein zu vermeidendes Hindernis handelt, eines Alarm- oder Steuersignals, um zu verhindern, dass das Bergbaufahrzeug mit dem Hindernis kollidiert.

2. Einrichtung nach Anspruch 1, wobei es sich bei dem Teil des Bergbaufahrzeugs um ein Arbeitsgerät (11) des Bergbaufahrzeugs handelt.

3. Einrichtung nach Anspruch 2, wobei der mindestens eine Speicher und der Computerprogrammcode dazu konfiguriert sind, mit dem mindestens einen Prozessor die Einrichtung zu veranlassen, den Satz von Hindernisanalyseparametern für das Bergbaufahrzeug (10) auf der Basis einer bestimmten Position des Arbeitsgeräts in Bezug auf einen Körper des Bergbaufahrzeugs zuzuweisen (200).

4. Einrichtung nach einem vorstehenden Anspruch, wobei der Satz von Hindernisanalyseparametern einen Satz von anpassbaren Auslösebedingungen umfasst, die zwei oder mehr Hindernisschweregrade definieren.

5. Einrichtung nach einem vorstehenden Anspruch, wobei der mindestens eine Speicher und der Computerprogrammcode dazu konfiguriert sind, zusammen mit dem mindestens einen Prozessor die Einrichtung dazu zu veranlassen, die Hindernisanalyse basierend auf mindestens einem des Folgenden durchzuführen (220): Höhe des Hinderniskandidaten, Querschnittsfläche des Hinderniskandidaten und Oberflächenneigung vor dem Hinderniskandidaten.

6. Einrichtung nach einem vorstehenden Anspruch, wobei der mindestens eine Speicher und der Computerprogrammcode dazu konfiguriert sind, mit dem mindestens einen Prozessor, die Einrichtung dazu zu veranlassen, Fahrstatusdaten zu bestimmen, die aktuelle Fahrparameter des Bergbaufahrzeugs angeben, und den Satz von Hindernisanalyseparametern auf der Basis bestimmter Fahrstatusdaten des Bergbaufahrzeugs dynamisch zuzuweisen (200).

7. Einrichtung nach einem vorstehenden Anspruch, wobei der mindestens eine Speicher und der Computerprogrammcode dazu konfiguriert sind, mit dem mindestens einen Prozessor die Einrichtung zu veranlassen, den Pfadzustand auf der Basis einer Umgebungsabtastung durch den Scanner (40) des Bergbaufahrzeugs und/oder andere Sensoren des Bergbaufahrzeugs (10) zu erfassen.

8. Einrichtung nach einem vorstehenden Anspruch, wobei der Pfadzustand eine oder mehrere Fahrbahn- oder Tunnelbodenoberflächenbedingungen umfasst.

9. Bergbaufahrzeug (10), das die Einrichtung nach einem vorstehenden Anspruch umfasst.

10. Verfahren zum Steuern eines Bergbaufahrzeugs, wobei das Verfahren Folgendes umfasst:
- Erfassen einer Pfadbedingung während ein Bergbaufahrzeug eine autonome Fahraufgabe durchführt,
- Zuweisen (200), auf der Basis der erfassten Pfadbedingungen, eines Satzes von Hindernisanalyseparametern für das Bergbaufahrzeug (10), während das Bergbaufahrzeug die autonome Fahraufgabe durchführt, wobei der Satz von Hindernisanalyseparametern spezifisch für einen Teil des Bergbaufahrzeugs ist,
- Erfassen (210), durch eine Hinderniserfassungsfunktion des Bergbaufahrzeugs, eines Hinderniskandidaten auf der Basis einer Verarbeitung von Abtastdaten von einem Scanner (40) des Bergbaufahrzeugs,
- Durchführen (220) einer Hindernisanalyse auf der Basis einer bestimmten Größe des Hinderniskandidaten und des Satzes von Hindernisanalyseparametern, die dem Bergbaufahrzeug zugewiesen sind, um den Hinderniskandidaten zu klassifizieren und zu bestimmen, ob es sich bei dem Hinderniskandidaten um ein zu vermeidendes Hindernis handelt, und
- Bereitstellen (230), infolgedessen, dass die Hindernisanalyse angibt, dass es sich bei dem Hinderniskandidaten um ein zu vermeidendes Hindernis handelt, eines Alarm- oder Steuersignals, um zu verhindern, dass das Bergbaufahrzeug mit dem Hindernis kollidiert.

11. Verfahren nach Anspruch 10, wobei der Satz von Hindernisanalyseparametern für das Bergbaufahrzeug (10) auf der Basis einer bestimmten Position eines Arbeitsgeräts des Bergbaufahrzeugs in Bezug auf eine Karosserie des Bergbaufahrzeugs zugewiesen wird.

12. Verfahren nach Anspruch 10 oder 11, wobei die Hindernisanalyse auf mindestens einem des Folgenden basiert: Höhe des Hinderniskandidaten, Querschnittsfläche des Hinderniskandidaten und Oberflächenneigung vor dem Hinderniskandidaten.

13. Verfahren nach einem der Ansprüche 10 bis 12, umfassend: Bestimmen von Fahrstatusdaten, die aktuelle Fahrparameter des Bergbaufahrzeugs angeben, und dynamisches Zuweisen (200) des Satzes von Hindernisanalyseparametern auf der Basis bestimmter Fahrstatusdaten des Bergbaufahrzeugs.

14. Computerprogramm, das einen Code umfasst, um, wenn in einer Datenverarbeitungseinrichtung ausgeführt, zu veranlassen, dass ein Verfahren nach Anspruch 10 bis 13 durchgeführt wird.

## Revendications

1. Appareil, comprenant au moins un processeur et au moins une mémoire incluant un code de programme informatique, la au moins une mémoire et le code de programme informatique étant configurés, avec le au moins un processeur, pour amener l'appareil au moins à réaliser :
- la détection d'un état de chemin pendant qu'un véhicule minier réalise une tâche de conduite autonome,
- l'attribution (200), sur la base de l'état de chemin détecté, d'un ensemble de paramètres d'analyse d'obstacles pour le véhicule minier (10) pendant que le véhicule minier réalise la tâche de conduite autonome, dans lequel l'ensemble de paramètres d'analyse d'obstacles est spécifique à une partie du véhicule minier,
- la détection (210), par une fonction de détection d'obstacles du véhicule minier, d'un obstacle candidat sur la base du traitement de données de balayage d'un scanner (40) du véhicule minier,
- la réalisation (220) d'une analyse d'obstacles sur la base d'une taille déterminée de l'obstacle candidat et de l'ensemble des paramètres d'analyse d'obstacles attribués au véhicule minier, afin de classer l'obstacle candidat et de déterminer si l'obstacle candidat est un obstacle à éviter, et
- la fourniture (230), en réponse à l'analyse d'obstacles indiquant que l'obstacle candidat est un obstacle à éviter, d'un signal d'alarme ou de commande pour éviter que le véhicule minier ne heurte l'obstacle.

2. Appareil selon la revendication 1, dans lequel la partie du véhicule minier est un outil de travail (11) du véhicule minier.

3. Appareil selon la revendication 2, dans lequel la au moins une mémoire et le code de programme informatique sont configurés, avec le au moins un processeur, pour amener l'appareil à attribuer (200) l'ensemble de paramètres d'analyse d'obstacles pour le véhicule minier (10) sur la base de la position déterminée de l'outil de travail par rapport à une carrosserie du véhicule minier.

4. Appareil selon une quelconque revendication précédente, dans lequel l'ensemble de paramètres d'analyse d'obstacles comprend un ensemble de conditions de déclenchement adaptables définissant deux ou plusieurs classes de gravité des obstacles.

5. Appareil selon une quelconque revendication précédente, dans lequel la au moins une mémoire et le code de programme informatique sont configurés, avec le au moins un processeur, pour amener l'appareil à réaliser (220) l'analyse d'obstacles sur la base au moins d'un élément parmi : la hauteur de l'obstacle candidat, la surface de la section transversale de l'obstacle candidat et la pente de la surface devant l'obstacle candidat.

6. Appareil selon une quelconque revendication précédente, dans lequel la au moins une mémoire et le code de programme informatique sont configurés, avec le au moins un processeur, pour amener l'appareil à déterminer des données d'état de conduite indiquant les paramètres de conduite actuels du véhicule minier, et à attribuer dynamiquement (200) l'ensemble de paramètres d'analyse d'obstacles sur la base des données d'état de conduite déterminées du véhicule minier.

7. Appareil selon une quelconque revendication précédente, dans lequel la au moins une mémoire et le code de programme informatique sont configurés, avec le au moins un processeur, pour amener l'appareil à détecter l'état de chemin sur la base d'une analyse d'environnement réalisée par le scanner (40) du véhicule minier et/ou d'autres capteurs du véhicule minier (10).

8. Appareil selon une quelconque revendication précédente, dans lequel l'état de chemin comprend un ou plusieurs états de surface de chaussée ou de sol de tunnel.

9. Véhicule minier (10), comprenant l'appareil selon une quelconque revendication précédente.

10. Procédé de commande d'un véhicule minier, le procédé comprenant :
- la détection d'un état de chemin pendant qu'un véhicule minier réalise une tâche de conduite autonome,
- l'attribution (200), sur la base de l'état de chemin détecté, d'un ensemble de paramètres d'analyse d'obstacles pour le véhicule minier (10) pendant que le véhicule minier réalise la tâche de conduite autonome, dans lequel l'ensemble de paramètres d'analyse d'obstacles est spécifique à une partie du véhicule minier,
- la détection (210), par une fonction de détection d'obstacles du véhicule minier, d'un obstacle candidat sur la base du traitement de données de balayage d'un scanner (40) du véhicule minier,
- la réalisation (220) d'une analyse d'obstacles sur la base d'une taille déterminée de l'obstacle candidat et de l'ensemble des paramètres d'analyse d'obstacles attribués au véhicule minier, afin de classer l'obstacle candidat et de déterminer si l'obstacle candidat est un obstacle à éviter, et
- la fourniture (230), en réponse à l'analyse d'obstacles indiquant que l'obstacle candidat est un obstacle à éviter, d'un signal d'alarme ou de commande pour éviter que le véhicule minier ne heurte l'obstacle.

11. Procédé selon la revendication 10, dans lequel l'ensemble de paramètres d'analyse d'obstacles pour le véhicule minier (10) est attribué sur la base de la position déterminée d'un outil de travail du véhicule minier par rapport à une carrosserie du véhicule minier.

12. Procédé selon la revendication 10 ou 11, dans lequel l'analyse d'obstacles est basée sur au moins l'un des éléments parmi : la hauteur de l'obstacle candidat, la surface de la section transversale de l'obstacle candidat et la pente de la surface devant l'obstacle candidat.

13. Procédé selon l'une quelconque des revendications 10 à 12, comprenant : la détermination de données d'état de conduite indiquant les paramètres de conduite actuels du véhicule minier, et l'attribution dynamique (200) de l'ensemble de paramètres d'analyse d'obstacles sur la base des données d'état de conduite déterminées du véhicule minier.

14. Programme informatique comprenant un code pour, lorsqu'il est exécuté dans un appareil de traitement de données, amener un procédé selon la revendication 10 à 13 à être réalisé.
